# EUROPEAN PATENT SPECIFICATION

(11) **EP 0 347 152 B1**
(45) Date of publication and mention of the grant of the patent: **01.06.1994**
(21) Application number: 89305937.8
(22) Date of filing: 13.06.1989
(51) Int. Cl.: B23C 5/10

(54) **Tapered slot end mill**
Schaftfräser für konische Nuten
Fraise à queue pour rainures coniques

(30) Priority: 14.06.1988 JP 79631/88 U
(43) Date of publication of application: 20.12.1989
(73) Proprietor: HITACHI TOOL KABUSHIKI KAISHA, Tokyo (JP)
(72) Inventor: Yodoshi, Shigeyasu, Osaka-shi (JP)
(74) Representative: Bowles, Sharon Margaret

(56) References cited:
- DE-C- 485 867
- DE-C- 929 021
- DE-U- 8 305 804
- GB-A- 1 404 492
- JP-U-63 161 615
- US-A- 2 377 329
- PATENT ABSTRACTS OF JAPAN vol. 7, no. 215 (M244)(1360) 22nd September 1983 ; & JP-A-58109215 (SANYO DENKI).

## Description

The present invention relates to a tapered end mill. Such mills may be used for machining or cutting rib slots or tapered slots in metal moulds for casting rib sections in resin products or die cast metal products.

It is well known that electrical discharge machining or cutting is generally used to cut tapered slots (rib slots) for casting rib sections in resin products or die casting metal products.

Electrical discharge machining uses an electrode having a shape corresponding to a rib slot of a metal mold and thus requires many processes: electrode forming, electrical discharging and polishing processes. These processes also require corresponding processing machines. Despite these problems, electrical discharge machining is frequently used for cutting deep rib slots (with a high ratio of depth to width) or when rib slots cannot be cut using a cutting tool due to limitations in the slot shape.

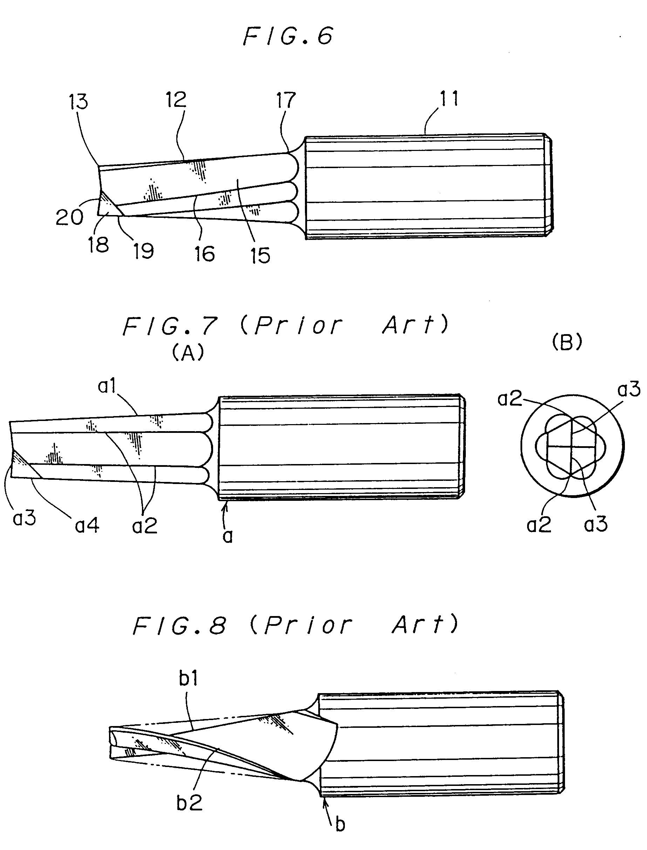

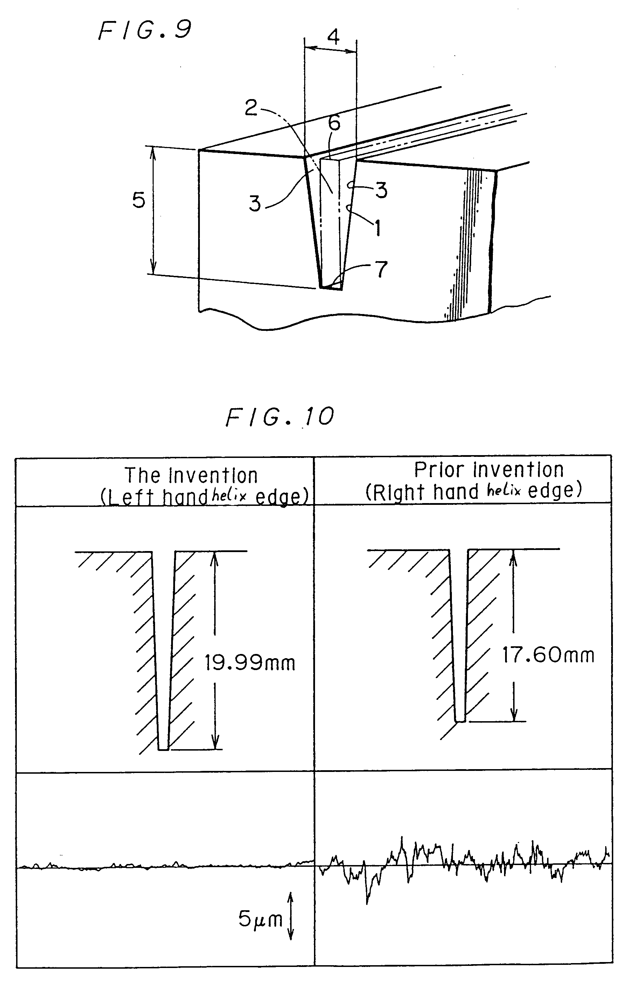

When cutting a rib slot using a cutting tool, as shown in Fig. 9, a generally-used square end mill cuts a rectangular cross-sectional slot section 2 which extends from the top 6 to the bottom 7 of the slot by repeating a cutting stroke in the longitudinal direction of the slot. Then a tapered end mill B having helix edges b₂ at its tapered section b₁ as shown in Fig. 8 is used to remove tapered sections 3. In the cross-sectional shape of a rib slot, the depth 5 of the slot is far greater than (five times or more) the width 4 of the slot. If the entire rib slot is cut by one process, the end mill must be extended further and the amount of cutting chips increases. The stiffness of the end mill reduces and cutting is impossible. Therefore, even when a single machine can be used for cutting unlike electrical discharge machining, costs for cutting tools are high and cutting efficiency is low.

A tapered end mill A with a polygonal cross-section shown in Fig. 7 is used to efficiently cut rib slots. More particularly, the tapered end mill (a) has a regular polygonal shape in the cross section perpendicular to the axis of the end mill at the tapered section a₁. Each edge a₂ is formed at the corresponding vertex of the regular polygonal shape along the axis and has a helix form. The edge is also formed along the imaginary tapered cylindrical surface which circumscribes the regular polygon. In addition, end cutting edges a₃ and peripheral cutting edges a₄ are formed at the smaller end of the tapered section a₁. With this tapered end mill (a), the cross-sectional area of the regular polygonal tapered section a₁ connected to the edge section at the smaller end is larger than that of an ordinary end mill. Therefore, the end mill is superior in stiffness and is less deformed by cutting force. Furthermore, each edge of the regular polygon functions as a wiper and provides a burnishing effect. These features eliminate the need for the preliminary process of cutting the above-mentioned rectangular section. With this single end mill, both the cutting and burnishing processes can be done simultaneously and quickly. When cutting a deep slot (such as a rib slot with a high ratio of depth to width), the tool requires large stiffness and superior cutting performance. Countermeasures should also be taken to reduce deflection during cutting and to maintain high cutting accuracy. An ordinary slot end mill has right hand helix edges to provide superior cutting performance and to discharge chips upward from the end cutting edge. In the case of the above-mentioned end mill with a polygonal cross section, its helix angle becomes smaller due to cutting force during cutting and self-excited vibration occurs sometimes in the direction of cutting into the bottom of the slot. This results in unstable cutting performance and breakage of the end mill.

To solve these problems, the tapered section of an end mill provided with a regular polygonal cross section and right hand helix edges is found in JP-U- 63-161615 (applied by the same assignor as that of this patent application). Since this end mill has a polygonal cross section, its stiffness, to which cutting performance is dependent on, is greater than that of a conventional end mill equipped with two cutting edges.

However, since the end mill of the prior application has right hand helix edges and starts cutting at the smaller end of the cutting edge, its cutting performance is not stable. The finished surface is rough and the cutting depth is smaller as clearly shown in Table 1 and Figure 10 (comparison).

### Summary of the Invention

It is an object of the present invention to provide a superior tapered rib slot end mill used in the cutting technology field of the metal mold industry by improving the cutting performance and efficiency of the above-mentioned regular polygonal end mill.

The invention is relevant to a tapered slot end mill of the general type comprising a shank and a tapered section having a polygonal shape and disposed at the end of said shank, said tapered section being adapted such that the edge formed at each vortex of said polygonal shape along the axis of said end mill is tapered to have a smaller diameter at the end of said end mill and has a helical twist, a pair of end cutting edges formed symmetrically at the ends of said edges, with a part of said cutting edge included in said end cutting edge, and a pair of peripheral cutting edges are respectively provided adjacent to said end cutting edges via rake angle surfaces.

In accordance with the invention the helical twist is formed in the direction opposite to the rotating direction of the end mill.

The edges may forcibly widen and burnish slot walls formed in a previous cut of the peripheral cutting edges.

With a preferred embodiment of the present invention, the forms of the tapered edges are changed along the axis so that rib slots with curved surfaces can be cut.

With another preferred embodiment of the present invention, the tapered inner surfaces forming the edges are middle-low concave surfaces. The angle between the tapered inner surfaces is thus made smaller and the wiper function of the edges is intensified.

The structure of the present invention is explained below referring to the accompanying drawings.

### Brief Description of the Drawings

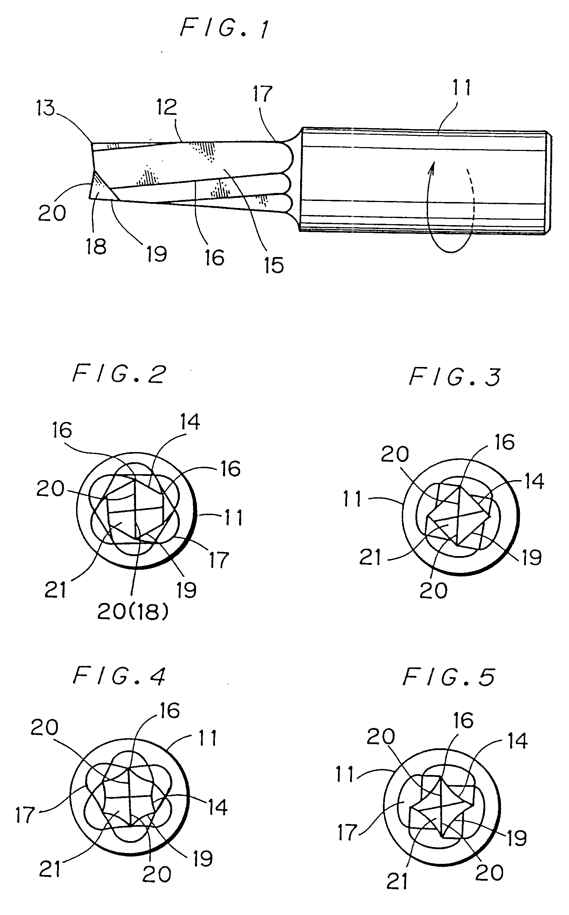

Fig. 1 is a front view illustrating an embodiment of the present invention, Fig. 2 is a bottom view of the embodiment shown in Fig. 1, Figs. 3, 4 and 5 are bottom views of other embodiments of the present invention, Fig. 6 is a front view of a still another embodiment of the present invention, Fig. 7 (A) is a front view of a conventional tapered end mill with a polygonal cross section, Fig. 7 (B) is a side view of the end mill shown in Fig. 7 (A), Fig. 8 is a front view of a conventional tapered end mill with two cutting edges, Fig. 9 is a perspective segmentary view illustrating a basic rib slot to explain the present invention and Fig. 10 compares the shape, depth and surface roughness of a rib slot cut by the polygonal tapered end mill with left hand helix (cut) edges of the present invention and those of rib slot cut by the tapered end mill with right hand helix (cut) edges of the prior application. The left column in Fig.10 illustrates the results of the present invention and the right column illustrates the results of the prior application.

### Detailed Description of the Invention

Figs. 1 and 2 shows an embodiment of the present invention, a tapered end mill with a hexagonal cross section. Fig. 3 shows a tapered end mill with a square cross section. Referring to Figs. 1 and 2, numeral 11 represents a shank which is removably installed into the spindle of a rotating cutting machine via a chuck and rotated around its axis in the direction indicated by the arrow. A tapered section 12 is provided at the end of the shank 11. The cross-sectional area of the tapered section 12 gradually increases along its length from the smaller end 13 to the shank 11. The cross section of the tapered section is a regular polygon, for example a hexagon as shown in Figs. 1 and 2. The tapered surface 15 formed by each side 14 of the polygon is twisted left in a tapered helix form as viewed from the smaller end 13 to the shank. The edge 16 of the end mill is formed along the tapered cylindrical surface formed between the circumscribed circle of the smaller end 13 and that of the taper ending section 17 on the shank side. A rake surface 18 is formed at the smaller end 13. At the intersection of the rake surface 18 and the tapered section 12, a peripheral edge 19 is formed to cut side walls. The length of the peripheral edge 19 should be equal to the diameter of the smaller end to obtain sufficient stiffness. At the intersection of the rake surface 18 and the smaller end 13, an end cutting edge 20 is formed toward the center of the axis. A relief surface 21 of the end cutting edge is also provided at the smaller end.

The tapered rib slot end mill of the present invention, having the above-mentioned structure, is installed into the end of the spindle of a rotating cutting machine (not shown) via a chuck.

The depth of cut for one cutting stroke from the top of work should not be greater than the length of the peripheral cutting edge 19. The end mill is moved perpendicular to its axis to cut a slot. When another depth of cut is provided and the tool is further moved after the bottom of the slot is cut, the peripheral cutting edge 19 performs cutting and the tapered polygonal helix edge 16 forcibly widens the slot walls and provides a burnishing effect to form a smooth tapered inner surface 1. By repeating this movement step by step until the desired depth is reached, both the cutting and burnishing processes can be done simultaneously and efficiently using a single tool.

The polygonal edge 16 of the tapered section 12 makes a smooth contact with the cut slot walls when the edge forcibly opens the walls since the edge is twisted left in a helix form. As a result, vibration is reduced and the tapered inner surface 1 is formed properly. The edge is twisted left only for the reason below. If twisted right, the polygonal edge cuts into the slot wall after the cutting load of the cutting edge is applied so that cutting begins under an unstable condition. As a result, the twist angle is reduced and self-excited vibration is apt to occur. To the contrary, in the case of the left hand twisting, the edge first contacts the slot walls and held between the walls when cutting begins. As a result, cutting can begin stably and smoothly and the obtained surface roughness is superior.

Referring to Fig. 10, the tapered end mill of the present invention, which has a tapered section with left hand helix edges, is compared with the tapered end mill of the prior application, which has a tapered section with right hand helix edges. Both have a square cross section. More specifically, the shape, depth and surface roughness of a rib slot cut by the former end mill are compared with those of a rib slot cut by the latter. The cutting conditions are shown in Table 1.

**Table 1**

| | | |
|---|---|---|
| Tapered end mill | Diameter: | I |
| | Half angle of taper: | 1°30′ |
| Work material | S55C | |
| Cutting conditions | Rotating speed: | 13,000 rpm |
| | Feed rate: | 400 mm/min |
| | Depth of cut: | 0.02 mm/stroke |

According to the results shown in Fig. 10, the end mill with left hand helix edges can cut deeper slots than the end mill with right hand helix edges. The surface roughness of the slot surface obtained by the former is far superior to that obtained by the latter. It is, therefore, obvious that the end mill of the present invention is ideally suited for cutting rib slots.

In the process of widening the slot walls using the edges to burnish the slot walls, the load increases as the taper angle is larger. To reduce the load, the sides of the polygon should be concaved as shown in Figs. 4 and 5. This decreases the edge angle and increases the rake angle (reduce the rake angle in the negative direction).

Producing conventional tapered end mills requires special skill and it is thus difficult to obtain desired shapes. In the case of the present invention, even a tapered end mill capable of cutting a slot with different taper angles (the taper angle at the top differs from that at the bottom) can be produced by simply changing the taper angle of the polygon edges. It is not necessary to change the cutting edges.

The above embodiment is a left hand helix edge type which is rotated clockwise. The effect of this end mill can also be obtained when a right hand helix edge type end mill is rotated counterclockwise.

The present invention also includes the embodiments listed below.
1. The taper angle between two edges symmetrical to each other along the axis is small at the smaller end of the tool and gradually increases along its length toward the larger end.
2. Each edge curves inward at a constant curvature.
3. The shape of the bottom is round.

The taper of the embodiment corresponding to item 1 is not straight but changes step by step. The side surface of the embodiment corresponding to item 2 has a circular taper. The end cutting edge of the embodiment corresponding to item 3 is round.

As described above, the single end mill of the present invention can perform slot cutting and burnishing simultaneously. No extra tools are required. Therefore, the end mill can form rib slots in a short period and in one process.

Since the taper section has a polygonal helix shape, its stiffness is far greater than that of an ordinary tapered end mill. This reduces breakage and ensures stability, resulting in low cost.

The polygonal edges are twisted in the direction opposite to the tool rotating direction. This ensures smooth burnishing of the tapered inner surface without causing vibration and produces slots which allow molds to be easily separated from cast product. Moreover, slot cutting and burnishing are done simultaneously using only one tool, greatly reducing production cost.

## Claims

1. A tapered slot end mill comprising a shank (11) and a tapered section (12) having a polygonal shape and disposed at the end of said shank, said tapered section being adapted such that the edge (16) formed at each vertex of said polygonal shape along the axis of said end mill is tapered to have a smaller diameter at the end of said end mill and has a helical twist, a pair of end cutting edges (20) formed symmetrically at the ends of said edges, with a part of said edge included in said end cutting edge, and a pair of peripheral cutting edges (19) are respectively provided adjacent to said end cutting edges (20) via rake angle surfaces (18), characterised in that said helical twist is formed in the direction opposite to the rotating direction of said end mill.

2. A tapered slot end mill according to claim 1, in which the sides of said polygon are concave.

3. A tapered slot end mill according to claim 1 or claim 2, in which said end mill rotates clockwise and has a left hand helical twist.

4. A tapered slot end mill according to claim 1 or claim 2, in which said end mill rotates counterclockwise and has right hand helical twist.

5. A tapered slot end mill according to any preceding claim in which said polygon is a hexagon or a square.

6. A tapered slot end mill according to any preceding claim in which the edges (16) forcibly widen and burnish slot walls formed in a previous cut of the peripheral cutting edges (19).

## Patentansprüche

1. Schaftfräser für keilförmige Schlitze, umfassend einen Schaft (11) und einen konischen Abschnitt (12), der eine vieleckige Form aufweist und am Ende des Schaftes angeordnet ist, wobei der konische Abschnitt so eingerichtet ist, daß die an jeder Scheitellinie der vieleckigen Form entlang der Achse des Schaftfräsers ausgebildete Kante (16) so konisch zulaufend ist, daß sie am Ende des Schaftfräsers einen kleineren Durchmesser hat und eine spiralförmige Drehung aufweist, an den Enden der Kante symmetrisch zwei Endschneidkanten (20) ausgebildet sind, wobei ein Teil der Kante in die Endschneidkante eingeschlossen ist, und zwei Umfangsschneidkanten (19) jeweils den Endschneidkanten (20) über Spanwinkelflächen (18) benachbart vorgesehen sind, dadurch gekennzeichnet, daß in der der Drehrichtung des Schaftfräsers entgegengesetzten Richtung eine spiralförmige Drehung ausgebildet ist.

2. Schaftfräser für keilförmige Schlitze gemäß Anspruch 1, wobei die Seiten des Vielecks konkav sind.

3. Schaftfräser für keilförmige Schlitze gemäß Anspruch 1 oder 2,
wobei der Schaftfräser im Uhrzeigersinn dreht und eine linksgängige spiralförmige Drehung aufweist.

4. Schaftfräser für keilförmige Schlitze gemäß Anspruch 1 oder 2,
wobei der Schaftfräser im Gegenuhrzeigersinn dreht und eine rechtsgängige spiralförmige Drehung aufweist.

5. Schaftfräser für keilförmige Schlitze gemäß einem der vorstehenden Ansprüche,
wobei das Vieleck ein Sechseck oder ein Quadrat ist.

6. Schaftfräser für keilförmige Schlitze gemäß einem der vorstehenden Ansprüche,
wobei die Kanten (16) bei einem vorausgegangenen Schneidvorgang der Umfangsschneidkanten (19) ausgebildete Schlitzwände zwangsweise erweitern und polieren.

## Revendications

1. Fraise à queue pour rainures coniques comprenant une queue de fixation (11) et une partie conique (12) présentant une forme polygonale et disposée à l'extrémité de ladite queue de fixation, ladite partie conique étant adaptée de telle manière que l'arête (16) formée à chaque sommet de ladite forme polygonale le long de l'axe de ladite fraise à queue est de forme conique de manière à présenter un diamètre plus faible à l'extrémité de ladite fraise à queue et présente une torsion hélicoïdale, une paire d'arêtes de coupe d'extrémité (20) formées de manière symétrique aux extrémités desdits bords, une partie de ladite arête étant comprise dans ladite arête de coupe d'extrémité et une paire d'arêtes de coupe périphériques (19) sont prévues respectivement de manière adjacente auxdites arêtes de coupe d'extrémité (20) par l'intermédiaire de faces (18) à angle de coupe orthogonal, caractérisée en ce que ladite torsion hélicoïdale est formée dans la direction opposée à la direction de rotation de ladite fraise à queue.

2. Fraise à queue pour rainures coniques selon la revendication 1, dans laquelle les côtés dudit polygone sont concaves.

3. Fraise à queue pour rainures coniques selon la revendication 1 ou la revendication 2, dans laquelle ladite fraise à queue tourne dans le sens des aiguilles d'une montre et présente une torsion hélicoïdale à gauche.

4. Fraise à queue pour rainures coniques selon la revendication 1 ou la revendication 2, dans laquelle ladite fraise à queue tourne dans le sens contraire des aiguilles d'une montre et présente une torsion hélicoïdale à droite.

5. Fraise à queue pour rainures coniques selon l'une des revendications précédentes, dans laquelle ledit polygone est un hexagone ou un carré.

6. Fraise à queue pour rainures coniques selon l'une des revendications précédentes, dans laquelle les bords (16) élargissent à force et polissent des parois de rainure formées dans une coupe précédente des arêtes de coupe périphérique (19).
